# EUROPEAN PATENT APPLICATION

(11) **EP 4 832 075 A1**
(43) Date of publication of application: **28.10.2026**
(21) Application number: 23962314.3
(22) Date of filing: 18.12.2023
(51) Int. Cl.: H01M 4/36, H01M 4/38, H01M 4/48, H01M 4/62, H01M 10/052, C01B 33/18, H01M 4/02

(54) **ANODE ACTIVE MATERIAL FOR LITHIUM SECONDARY BATTERY, SECONDARY BATTERY COMPRISING SAME, AND MANUFACTURING METHOD THEREOF**

(71) Applicant: POSCO Holdings Inc., Pohang-si, Gyeongsangbuk-do 37859 (KR); Research Institute of Industrial Science & Technology, Pohang-si, Gyeongsangbuk-do 37673 (KR)
(72) Inventor: CHO, Moonkyu, Pohang-si, Gyeongsangbuk-do 37671 (KR); YOU, Seung Jae, Pohang-si, Gyeongsangbuk-do 37655 (KR); WOO, Jung Gyu, Pohang-si, Gyeongsangbuk-do 37671 (KR)
(74) Representative: Pfenning, Meinig & Partner mbB
(86) International application number: PCT/KR2023/020893
(87) International publication number: WO 2025/135208

(57) **Abstract**

The present invention relates to a negative electrode active material for a lithium secondary battery and a method for manufacturing the same. The negative electrode active material for a lithium secondary battery includes a silicon-based base material and a coating layer coated on a surface of the silicon-based base material, wherein the coating layer includes a carbon layer and at least one nano carbon bead, the carbon layer and the nano carbon bead include sulfur, and a content of a coating material in the coating layer may be 0.10 wt% to 1.50 wt%.

## Description

### [TECHNICAL FIELD]

The present invention relates to a battery, and more particularly, to a negative electrode active material for a lithium secondary battery, a secondary battery comprising the same, and a method for manufacturing the same.

### [BACKGROUND ART]

Social interest in depletion of fossil fuels and environmental pollution caused by use of the fossil fuels has increased, and, as a solution thereto, eco-friendly energy sources have attracted attention. Among the eco-friendly energy sources, interest in electric energy has increased, and in particular, lithium secondary batteries have attracted attention.

Lithium secondary batteries are widely used in small applications such as mobile phones and notebook computers and in medium-to-large applications such as electric vehicles and energy storage systems. As the application range of lithium secondary batteries expands, development of new materials for high capacity and high output is becoming important. However, when considering measures for improving electrochemical characteristics, such as extending efficient usage time in the small applications and improving energy characteristics in the medium-to-large applications such as electric vehicles, improvement of the electrochemical characteristics remains a technical problem to be solved. Specifically, among the components of the lithium secondary battery, a negative electrode material serves to store lithium ions and is a factor related to the capacity and lifespan of the lithium secondary battery. Various types of carbon-based materials, including artificial graphite, natural graphite, and hard carbon, into and from which lithium can be inserted and desorbed, have been applied as the negative electrode material. Graphite has a low discharge voltage of 0.2 V relative to lithium, and thus a battery using the graphite as a negative electrode active material exhibits a high discharge voltage of 3.6 V, thereby providing advantages in terms of energy density of a lithium secondary battery. In addition, graphite ensures a long lifespan of a lithium secondary battery due to excellent reversibility and is most widely used.

Natural graphite has advantages in that it is inexpensive and exhibits electrochemical characteristics similar to those of artificial graphite, and thus has excellent utility as a negative electrode material. However, since natural graphite has a plate-like shape, its surface area is large and edge portions are exposed as they are, and thus, when applied as a negative electrode active material, electrolyte penetration or decomposition reaction may occur. For this reason, edge portions are peeled off or destroyed, causing a large irreversible reaction, and when the natural graphite is manufactured into an electrode plate, the graphite active material is flatly pressed and oriented on a current collector, so that impregnation with an electrolyte solution is not easy and charge/discharge characteristics may deteriorate.

Research on new negative electrode materials for overcoming the limitations of graphite has continued, and in particular, interest in silicon-based negative electrode materials has increased. Silicon not only has abundant reserves worldwide, but also has a high theoretical capacity of about 4,200 mAh/g compared to graphite, has a low reaction potential with lithium, and is an eco-friendly material.

However, since the silicon-based negative electrode material is used by mechanically pulverizing bulk silicon, the silicon-based negative electrode material has an irregular shape, and the irregular shape irregularly causes expansion and contraction of volume occurring during charging and discharging of silicon, thereby causing a decrease in battery performance. In addition, a non-uniform electrode may be manufactured during electrode manufacturing, thereby causing a decrease in battery performance.

In order to solve the above-described problems, efforts are required to suppress side reactions of the negative electrode material with an electrolyte solution and further improve conductivity.

### [DETAILED DESCRIPTION OF THE INVENTION]

### [Technical Problem]

A technical problem to be solved by the present invention is to provide a negative electrode active material in which side reactions with an electrolyte solution are suppressed and conductivity is further improved.

Another technical problem to be solved by the present invention is to provide a method for manufacturing a negative electrode active material having the above-described advantages.

### [Technical Solution]

A negative electrode active material according to an embodiment of the present invention includes a silicon-based base material and a coating layer coated on a surface of the silicon-based base material, wherein the coating layer includes a carbon layer and at least one nano carbon bead, the carbon layer and the nano carbon bead include sulfur, and a content of a coating material may be 0.10 wt% to 1.50 wt% based on 100 wt% of the entire active material.

The negative electrode active material according to an embodiment may satisfy the following Equation 1. <Equation 1> $0.50 \leq coating material content \left[wt%\right] \times BET specific surface area \left[{m}^{2}/g\right] \leq 9.50$

The negative electrode active material according to an embodiment may satisfy the following Equation 2. <Equation 2> 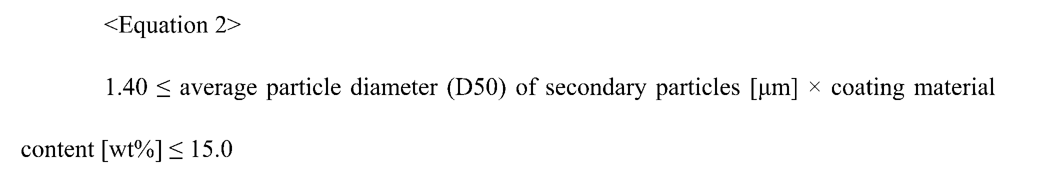 1.40 ≤ average particle diameter (D50) of secondary particles [µm] × coating material content [wt%] ≤ 15.0

The negative electrode active material according to an embodiment may satisfy the following Equation 3. <Equation 3> $2.0 \leq \left(sulfur content \left[wt%\right]/coating material content \left[wt%\right]\right) \times 100 \leq 120.0$

In an embodiment, the negative electrode active material may include sulfur in an amount of 0.03 wt% to 0.3 wt%. In an embodiment, a D10 particle diameter of secondary particles may be 2.0 µm to 6.5 µm. In an embodiment, an average particle diameter (D50) of secondary particles may be 6.7 µm to 9.5 µm.

In an embodiment, a D90 particle diameter of secondary particles may be 10.6 µm to 15.7 µm. In an embodiment, a Span value ((D90-D10)/D50) of secondary particles may be 0.80 to 1.40. In an embodiment, the silicon-based base material may be silicon alone, silicon oxide, silicon nitride, silicon sulfide, silicon carbide, a silicon-metal alloy, or a combination thereof.

In an embodiment, the carbon layer may be an amorphous carbon layer. In an embodiment, the carbon layer may have a thickness of 1.0 nm to 10 nm. In an embodiment, the at least one nano carbon bead may be configured as at least one cluster. In an embodiment, the at least one nano carbon bead may be at least one of a spherical shape and an elliptical shape.

A method for manufacturing a negative electrode active material for a lithium secondary battery according to another embodiment of the present invention includes uniformly mixing a silicon-based material to be coated and a coating material containing sulfur, and heat-treating and carbonizing the mixed resultant, wherein the coating material may be included in an amount of 1 part by weight to 8 parts by weight with respect to 100 parts by weight of the material to be coated. In an embodiment, the method for manufacturing a negative electrode active material for a lithium secondary battery may satisfy the following Equation 4. <Equation 4> 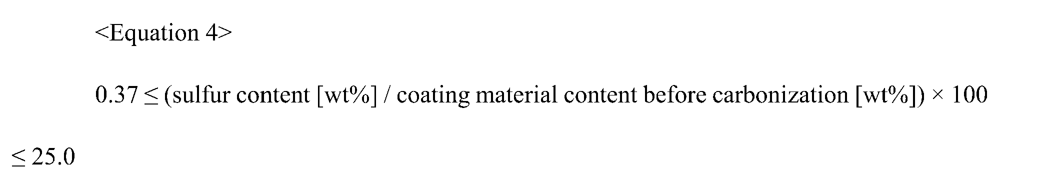 0.37 ≤ (sulfur content [wt%] / coating material content before carbonization [wt%]) × 100 ≤ 25.0

In an embodiment, the silicon-based material to be coated may include silicon alone, silicon oxide, silicon nitride, silicon sulfide, silicon carbide, a silicon-metal alloy, or a combination thereof. In an embodiment, the coating material containing sulfur may be coal tar or petroleum-based residual oil (PFO: pyrolyzed fuel oil).

### [Advantageous Effects]

The negative electrode active material according to an embodiment is intended to provide a negative electrode material in which side reactions with an electrolyte solution are suppressed and conductivity is further improved by including, as a coating layer, a carbon layer including sulfur and at least one nano carbon bead.

A lithium secondary battery according to another embodiment of the present invention is intended to provide a lithium secondary battery including the negative electrode active material having the above-described advantages.

Another embodiment of the present invention is intended to provide a method for providing the negative electrode active material having the above-described advantages.

### [BRIEF DESCRIPTION OF THE DRAWINGS]

FIGS. 1A and 1B are SEM and TEM photographs of a negative electrode active material for a lithium secondary battery according to an embodiment of the present invention.
FIGS. 2A and 2B are SEM and TEM photographs of a negative electrode active material for a lithium secondary battery according to a Comparative Example of the present invention, and FIGS. 2C and 2D are SEM and TEM photographs of a negative electrode active material for a lithium secondary battery according to another Comparative Example of the present invention.
FIGS. 3A to 3D are SEM-EDAX photographs of a negative electrode active material for a lithium secondary battery according to an embodiment of the present invention.

### [MODE FOR CARRYING OUT THE INVENTION]

Terms such as first, second, and third are used to describe various parts, components, regions, layers, and/or sections, but are not limited thereto. These terms are used only to distinguish one part, component, region, layer, or section from another part, component, region, layer, or section. Accordingly, a first part, component, region, layer, or section described below may be referred to as a second part, component, region, layer, or section without departing from the scope of the present invention.

The terminology used herein is merely for referring to particular embodiments and is not intended to limit the present invention. As used herein, singular forms also include plural forms unless the context clearly indicates otherwise. As used in the specification, the term "comprising" specifies stated features, regions, integers, steps, operations, elements, and/or components, and does not exclude the presence or addition of other features, regions, integers, steps, operations, elements, and/or components.

When a part is referred to as being "above" or "on" another part, it may be directly above or on the other part, or another part may be interposed therebetween. In contrast, when a part is referred to as being "directly above" another part, no other part is interposed therebetween.

In the present specification, D10 means a particle size at 10% by volume in a cumulative size-distribution curve, D50 means a particle size at 50% by volume, and D90 means a particle size at 90% by volume.

Although not otherwise defined, all terms used herein, including technical and scientific terms, have the same meanings as commonly understood by a person having ordinary skill in the art to which the present invention pertains. Terms defined in commonly used dictionaries are further interpreted as having meanings consistent with the related technical literature and the presently disclosed content, and unless defined otherwise, are not interpreted in an idealized or overly formal sense.

Hereinafter, embodiments of the present invention will be described in detail so that a person having ordinary skill in the art to which the present invention pertains can easily practice the present invention. However, the present invention may be embodied in various different forms and is not limited to the embodiments described herein.

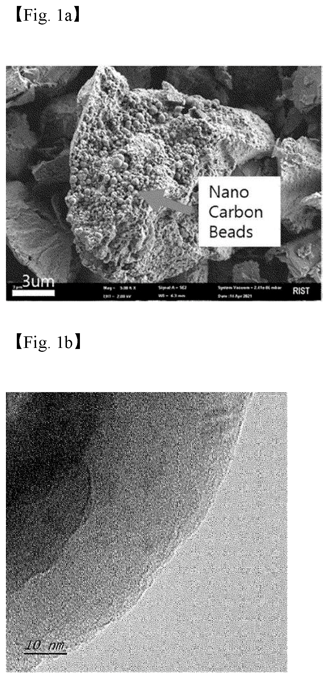

FIGS. 1A and 1B are SEM and TEM photographs of a negative electrode active material for a lithium secondary battery according to an embodiment of the present invention.

Referring to FIGS. 1A and 1B, the negative electrode active material for a lithium secondary battery according to an embodiment of the present invention includes a silicon-based base material and a coating layer coated on a surface of the silicon-based base material, wherein the coating layer may include at least one of a carbon layer and nano carbon beads. Specifically, the nano carbon beads may be disposed on the carbon layer.

The silicon-based base material may be silicon alone, silicon oxide, silicon nitride, silicon sulfide, silicon carbide, a silicon-metal alloy, or a combination thereof. Specifically, in the case of the silicon oxide, the silicon oxide may be SiOₓ, and in the case of the silicon carbide, the silicon carbide may be a Si-C composite.

The coating layer may be at least partially coated on the surface of the silicon base material by a coating material. The coating layer may be coated on part or all of the surface of the silicon base material. Specifically, the nano carbon beads may be coated on part or all of the coating layer.

In an embodiment, the coating layer may contain a coating material in an amount of 0.10 wt% to 1.50 wt% in the negative electrode active material. The coating material may be, for example, coal tar, petroleum-based residual oil (PFO: pyrolyzed fuel oil), or a combination thereof. Specifically, the content of the coating material may be 0.20 wt% to 1.46 wt% in the negative electrode active material. The content of the coating material means the content of the coating material of the negative electrode active material after undergoing a carbonization process in a predetermined temperature range, for example, at a temperature of 900°C or higher.

When the content of the coating material exceeds the upper limit, an amorphous carbon layer is formed thickly, thereby hindering movement of lithium ions and causing irreversibility, resulting in deterioration of initial efficiency and initial capacity of the battery and degradation of lifespan. When the content of the coating material is below the lower limit, the amorphous carbon layer becomes insufficient, causing a high specific surface area and failing to secure sufficient electrical conductivity, resulting in deterioration of initial efficiency and initial capacity and thus degradation of lifespan of the battery.

In an embodiment, the coating layer may include a carbon layer and at least one nano carbon bead. The carbon layer and the nano carbon bead may be coated from a coating material, for example, a coating material derived from coal tar. The carbon layer may be a coating layer having a layered structure with high carbon content. The nano carbon bead may be a bead-shaped material having high carbon content.

In an embodiment, the carbon layer and the nano carbon bead may include sulfur. Since the carbon layer and the nano carbon bead include sulfur, sulfur doped in a carbon lattice provides extra electrons, thereby increasing an electron concentration and improving electrical conductivity.

In an embodiment, the carbon layer and the nano carbon bead may include sulfur in an amount of 0.03 wt% to 0.3 wt% based on 100 wt% of the entire negative electrode active material composition. Specifically, the sulfur content may be 0.03 wt% to 0.25 wt%. When the sulfur content exceeds the upper limit, an amorphous carbon layer containing sulfur is formed thickly, thereby hindering movement of lithium ions and causing irreversibility, resulting in deterioration of initial efficiency and initial capacity of the battery and degradation of lifespan of the battery. When the sulfur content is below the lower limit, an amorphous carbon layer containing sulfur is formed in a small amount, thereby exposing the surface of the base material, causing a high specific surface area, and failing to secure sufficient electrical conductivity, resulting in deterioration of initial efficiency and initial capacity of the battery and degradation of lifespan.

In an embodiment, the content of sulfur relative to the content of the coating material may be 0.02 to 1.20. The content of sulfur relative to the content of the coating material means a value obtained by dividing the sulfur content by the content of the coating material remaining in the negative electrode active material after undergoing the carbonization process.

When the content of the coating material exceeds the upper limit, an amorphous carbon layer is formed thickly, thereby hindering movement of lithium ions (Li) and causing irreversibility, resulting in deterioration of initial efficiency and initial capacity of the battery and thus degradation of lifespan of the battery. When the content of the coating material is below the lower limit, the amorphous carbon layer is insufficiently formed, thereby exposing the surface of the base material, causing a high specific surface area, failing to secure sufficient electrical conductivity, resulting in deterioration of initial efficiency and initial capacity and degradation of lifespan of the battery.

In an embodiment, the carbon layer may be an amorphous carbon coating layer. In an embodiment, the carbon layer may have a thickness in a range of 1.0 nm to 10 nm. Specifically, the carbon layer may have a range of 1.0 nm to 8.0 nm. When the thickness of the carbon layer exceeds the upper limit, the amorphous layer acts as a resistance, thereby hindering movement of lithium ions and causing irreversibility, resulting in deterioration of initial efficiency and initial capacity and degradation of battery lifespan. When the thickness of the carbon layer is below the lower limit, the surface of the base material is exposed due to insufficiency of the amorphous carbon layer, causing a high specific surface area and failing to secure sufficient conductivity, thereby failing to secure sufficient electrical conductivity, resulting in deterioration of initial efficiency and initial capacity and thus degradation of battery lifespan.

In an embodiment, the nano carbon beads may be configured as at least one cluster. The cluster means a group of grains, and the nano carbon beads may have not only a single grain shape but also a group shape in which the grains are aggregated.

In an embodiment, the at least one nano carbon bead may have at least one shape of a spherical shape and an elliptical shape. The at least one nano carbon bead may have a particle diameter of 2.0 nm to 1.0 µm. Specifically, the nano carbon bead may have a particle diameter of 3.0 nm to 0.9 µm. When the particle diameter of the nano carbon bead exceeds the upper limit, dispersion of the coating material is not easy, and non-uniform particle size and a non-uniform amorphous coating layer are formed, thereby causing deterioration of battery performance. When the particle diameter of the nano carbon bead is below the lower limit, initial efficiency may decrease as specific surface area increases.

In an embodiment, at least one nano carbon bead may be disposed on at least one of the silicon-based base material and the carbon layer. Specifically, the nano carbon bead may be disposed on the silicon-based base material, may be disposed on the carbon layer, or may be partially disposed on the silicon-based base material and partially disposed on the carbon layer.

In an embodiment, the negative electrode active material of the present invention may be configured as at least one secondary particle, and the D10 of the secondary particles may be 2.0 µm to 6.5 µm. Specifically, the D10 may be 2.3 µm to 6.3 µm. More specifically, the D10 may be 2.3 µm to 4.0 µm. When the D10 range is below the lower limit, there is a problem in that the fine powder content increases and contact is not easy, and there is a problem in that electrochemical characteristics of the battery deteriorate.

In an embodiment, the D50 of the secondary particles may be 6.5 µm to 10 µm. Specifically, the D50 may be 6.7 µm to 9.5 µm. More specifically, the D50 may be 6.7 µm to 9.1 µm.

When the D50 range exceeds the upper limit, characteristics that may affect electrode quality, such as dispersion problems with graphite when manufacturing a mixed electrode with the graphite, deteriorate, thereby causing deterioration of electrochemical characteristics of the battery. When the D50 range is below the lower limit, there is a problem in that yield decreases during a fine pulverization process.

In an embodiment, the D90 of the secondary particles may be 10.0 µm to 16.0 µm. Specifically, the D90 may be 10.6 µm to 15.7 µm.

When the D90 range exceeds the upper limit, dispersion problems with graphite when manufacturing a mixed electrode with the graphite occur and lithium ion diffusion time increases, thereby causing deterioration of electrochemical characteristics of the battery. When the D90 range is below the lower limit, there is a relation with the D50, and there is a problem in a fine pulverization process for implementing the same.

In an embodiment, the Span value ((D90-D10)/D50) of the secondary particles may be in a range of 0.80 to 1.40. Specifically, the Span value may be in a range of 0.86 to 1.39. More specifically, the Span value may be in a range of 1.20 to 1.39. More specifically, the Span value may be in a range of 1.26 to 1.39.

The Span value means the narrowness or wideness between a minimum value and a maximum value in an average value of a particle size distribution using a laser diffraction method. Specifically, the Span value means a difference between D90 and D10 relative to an average particle diameter (D50). Since the Span value satisfies 0.9 to 1.3, there is an advantage in that a negative electrode active material having excellent battery characteristics due to uniform dispersion during electrode manufacturing can be implemented. Specifically, the Span value may satisfy the above range when D50 is in a range of 6.7 µm to 9.1 µm.

When the Span value exceeds the upper limit, there is a problem in that the particle size distribution becomes too wide, making uniform dispersion difficult. When the Span value is below the lower limit, there is a problem in that the particle size distribution becomes narrow, making it difficult to maintain uniform contact between particles.

In an embodiment, the negative electrode active material for a lithium secondary battery may satisfy the following Equation 1. <Equation 1> $0.50 \leq coating material content \left[wt%\right] \times BET specific surface area \left[{m}^{2}/g\right] \leq 9.50$

The coating material content after carbonization in Equation 1 is the content of the coating material in the final product, and means the content of the coating material after carbonization. Equation 1 can confirm a correlation between an appropriate coating material content of the negative electrode active material and the BET specific surface area.

Equation 1 may satisfy 0.50 to 9.50. Specifically, Equation 1 may satisfy 0.80 to 6.40, and more specifically 0.88 to 6.38.

When the value of Equation 1 exceeds the upper limit, it means that the amorphous carbon layer is thick, and accordingly, movement of lithium ions is hindered, irreversibility occurs, initial efficiency and initial capacity of the battery decrease, and lifespan is degraded. When the value of Equation 2 is below the lower limit, the surface of the base material is exposed due to insufficiency of the amorphous carbon layer, causing a high specific surface area, failing to secure sufficient electrical conductivity, resulting in deterioration of initial efficiency and initial capacity and degradation of lifespan.

The negative electrode active material for a lithium secondary battery according to an embodiment of the present invention may satisfy the following Equation 2. <Equation 2> 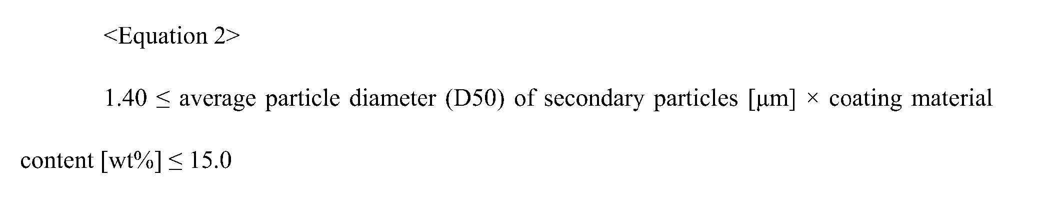 1.40 ≤ average particle diameter (D50) of secondary particles [µm] × coating material content [wt%] ≤ 15.0

In Equation 2, D50 means D50 of the secondary particles, and the coating material content means the content of the coating material after carbonization. Equation 2 may satisfy a range of 1.40 to 15.0. Specifically, Equation 2 may satisfy a range of 1.41 to 13.6.

When the upper limit of Equation 3 is exceeded, the central particle diameter becomes large or the particle distribution becomes non-uniform, and when a mixed electrode with graphite is manufactured, electrode quality is affected, such as dispersion problems with graphite, and it is difficult to derive normal electrochemical properties. When the lower limit of Equation 3 is not satisfied, the surface of the base material is exposed due to insufficiency of the amorphous carbon layer, causing a high specific surface area, failing to secure sufficient electrical conductivity, resulting in deterioration of initial efficiency and initial capacity and degradation of battery lifespan.

In an embodiment, the negative electrode active material for a lithium secondary battery may satisfy the following Equation 3. <Equation 3> $2.0 \leq \left(sulfur content \left[wt%\right]/coating material content \left[wt%\right]\right) \times 100 \leq 120.0$

Equation 3 means a percentage of the sulfur content relative to the content of the coating material after carbonization. Equation 3 may satisfy 2.0 to 120.0. Specifically, Equation 3 may satisfy 2.05 to 118.6.

When the value of Equation 3 exceeds the upper limit, the amorphous carbon layer is insufficient and the surface of the base material is exposed, causing a high specific surface area, failing to secure sufficient electrical conductivity, resulting in deterioration of initial efficiency and initial capacity when applied to a battery and degradation of lifespan. When the value of Equation 3 is below the lower limit, the amorphous carbon layer is formed thickly, thereby hindering movement of lithium ions and causing irreversibility, resulting in deterioration of initial efficiency and initial capacity of the battery and degradation of lifespan.

In an embodiment, the negative electrode active material for a lithium secondary battery may have an expansion ratio of 60.0% or less. Specifically, the expansion ratio may be in a range of 40.0% to 60.0%. More specifically, the expansion ratio may be in a range of 44.0% to 58.0%.

The expansion ratio means a percentage value obtained by dividing [(thickness of the electrode after 50 cycles - thickness of the Cu current collector) - (thickness of the fresh electrode - thickness of the Cu current collector)] by (thickness of the fresh electrode - thickness of the Cu current collector). When the expansion ratio exceeds the upper limit, excessive expansion of the negative electrode material occurs, causing deformation of an electrode structure constituting the inside of a cell, resulting in inferior stability and hindering smooth movement of lithium ions, thereby causing degradation of battery lifespan.

A method for manufacturing a negative electrode active material for a lithium secondary battery according to an embodiment of the present invention includes uniformly mixing a silicon-based material to be coated and a coating material containing sulfur, and heat-treating and carbonizing the mixed resultant. The silicon-based material to be coated is the same as the above-described silicon-based base material within a range not inconsistent therewith.

The coating material containing sulfur is a material containing sulfur, and may be, for example, coal tar. The coating material containing sulfur may be in a powder phase, a liquid phase, or a gas phase, and specifically may be a liquid material containing sulfur.

In an embodiment, the coating material may have 25 dyne/cm to 45 dyne/cm, and specifically 30 dyne/cm to 40 dyne/cm, at room temperature. The silicon-based base material, which is the material to be coated, may have a surface tension higher than that of the coating material, for example, 65 dyne/cm to 75 dyne/cm. Accordingly, due to a difference in surface tension between the coating material and the material to be coated, the coating material may be uniformly coated on the surface of the material to be coated, and remaining coating material after coating on the surface forms a spherical or elliptical shape in order to lower surface energy during a carbonization process, thereby forming nano carbon beads.

In an embodiment, the coating material may be included in an amount of 1 part by weight to 8 parts by weight with respect to 100 parts by weight of the material to be coated. Specifically, the coating material may be included in an amount of 2 parts by weight to 7 parts by weight with respect to 100 parts by weight of the material to be coated, and more specifically 3 parts by weight to 5 parts by weight with respect to 100 parts by weight of the material to be coated.

When the upper limit of the above range is exceeded, aggregation or granulation between particles is caused, resulting in an increase in particle size, a nano carbon amorphous layer is formed thickly, and the amorphous layer is formed thickly, thereby hindering movement of lithium ions and causing irreversibility, resulting in deterioration of initial efficiency and initial capacity and degradation of lifespan. When the lower limit of the above range is not satisfied, the amorphous carbon layer becomes insufficient, exposing the surface of the base material, causing a high specific surface area, failing to secure sufficient electrical conductivity, and causing deterioration of initial efficiency and initial capacity and degradation of lifespan.

In an embodiment, uniformly mixing the silicon-based material to be coated and the coating material containing sulfur may be performed by a dry mixing step. The dry mixing step may be a mechanical mixing treatment, and the mechanical mixing treatment may be performed by selecting any one method among ball milling, mechanofusion milling, shaker milling, planetary milling, attritor milling, disk milling, shape milling, nauta milling, nobilta milling, planetary, 3D-mixer, V-mixer, mechano-fusion, hybridizer, paste mixer, or combinations thereof.

The step of heat-treating and carbonizing the mixed resultant may be performed by carbonizing the coating material on the surface of the material to be coated while heat-treating the resultant in which the coating material and the material to be coated are mixed.

In an embodiment, the step of heat-treating and carbonizing the mixed resultant may be performed in a range of 800°C to 1,000°C. Specifically, the range may be 850°C to 950°C.

When the heat treatment is performed in a range exceeding the upper limit of the above range, there is a problem in that crystal grain growth of Si is caused, resulting in decreases in battery capacity and efficiency. When the heat treatment is performed in a range below the lower limit of the above range, there is a problem in that uniform amorphization of the coating material is difficult to achieve.

In an embodiment, the method for manufacturing a negative electrode active material for a lithium secondary battery may satisfy the following Equation 4. <Equation 4> 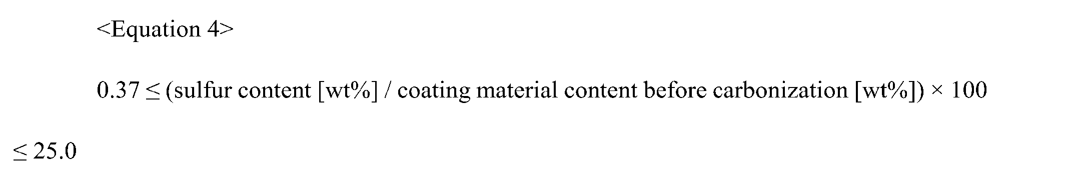 0.37 ≤ (sulfur content [wt%] / coating material content before carbonization [wt%]) × 100 ≤ 25.0

Equation 4 means the sulfur content [wt%] relative to the coating material content before carbonization [wt%]. Equation 4 may be 0.37 to 25.0, and specifically Equation 4 may be 0.43 to 24.9.

When the range of Equation 4 exceeds the upper limit, the surface of the base material is exposed due to insufficiency of the amorphous carbon layer, causing a high specific surface area, failing to secure sufficient electrical conductivity, resulting in deterioration of initial efficiency and initial capacity and degradation of lifespan. When the range of Equation 4 is below the lower limit, the amorphous layer acts as a resistance, thereby reducing movement of lithium ions and causing irreversibility, resulting in deterioration of initial efficiency and initial capacity and degradation of battery lifespan.

A lithium secondary battery according to another embodiment of the present invention may include a negative electrode including the above-described negative electrode active material, a positive electrode including a positive electrode active material, a separator positioned between the negative electrode and the positive electrode, and an electrolyte solution. The description of the negative electrode active material is the same as the above-described negative electrode active material for a lithium secondary battery within a range not inconsistent therewith.

The positive electrode may be any one selected from the group consisting of LiCoO₂, LiNiO₂, LiNiₓMnO₂, Li₁₊*z*NiₓMn_{γ}Co_{1-x-γ}O₂, LiNiₓCo_{γ}Al*z*O₂, LiV₂O₅, LiTiS₂, LiMoS₂, LiMnO₂, LiCrO₂, LiMn₂O₄, LiFeO₂, LiFePO₄, and combinations thereof, wherein x is 0.3 to 0.8, y is 0.1 to 0.45, and z may independently be 0 to 0.2. More specifically, the positive electrode may be LiFePO₄, LiCoO₂, NCM811, or NCM622. As the negative electrode, the above-described active material for a lithium secondary battery or a negative electrode active material manufactured through the method for manufacturing a precursor of the negative electrode active material may be used.

As the separator, a conventional porous polymer film conventionally used as a separator, for example, a porous polymer film made of a polyolefin-based polymer such as an ethylene homopolymer, a propylene homopolymer, an ethylene/propylene copolymer, an ethylene/butene copolymer, an ethylene/hexene copolymer, or an ethylene/methacrylate copolymer, may be used alone or in a laminate thereof, or a conventional porous nonwoven fabric, for example, a nonwoven fabric made of high-melting-point glass fiber, polyethylene terephthalate fiber, or the like, may be used, and these are non-limiting examples.

In the electrolyte solution, a lithium salt that may be included as an electrolyte may be any lithium salt commonly used in electrolyte solutions for lithium secondary batteries without limitation. For example, an anion of the lithium salt may be any one selected from the group consisting of F⁻, Cl⁻, Br⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, and (CF₃CF₂SO₂)₂N⁻.

In the electrolyte solution, as the organic solvent, organic solvents commonly used in electrolyte solutions for lithium secondary batteries may be used without limitation. Representative examples thereof may include propylene carbonate (PC), ethylene carbonate (EC), diethyl carbonate (DEC), dimethyl carbonate (DMC), ethyl methyl carbonate (EMC), methyl propyl carbonate, dipropyl carbonate, dimethyl sulfoxide, acetonitrile, dimethoxyethane, diethoxyethane, vinylene carbonate, sulfolane, gamma-butyrolactone, propylene sulfite, tetrahydrofuran, or a mixture of two or more thereof.

The lithium secondary battery may be disposed in a battery case. The battery case may be, as non-limiting examples, any one of a cylindrical type using a can, a prismatic type, a pouch type, and a coin type.

Hereinafter, embodiments of the present invention will be described in detail so that a person having ordinary skill in the art to which the present invention pertains can easily practice the present invention. However, the present invention may be embodied in various different forms and is not limited to the embodiments described herein.

### <Component Characteristics>

The coating material of the present invention may be a sulfur-containing liquid material in which liquid coal tar generated during dry distillation of raw coal in a steel mill has fluidity at room temperature, and thus is not measured by ASTM D3104 (softening point measurement method 1, softening point of 50°C or more) or ASTM D36 (softening point measurement method 2, softening point of 30°C or more), has a specific gravity of 1.1 g/cc to 1.3 g/cc, and has a fixed carbon amount of 19% to 23% during carbonization at 900°C.

When the liquid material is coated on a base material, which is a material to be coated, due to characteristics of the liquid, a carbon layer including sulfur and nano carbon beads (NCB) are formed on the surface of the base material.

### <Manufacturing Process>

As a process for manufacturing the negative electrode material of the present invention, in order to form the amorphous carbon layer and the nano carbon beads of the negative electrode material, a coating process includes a step of uniformly dry-mixing a silicon-based material to be coated and a coating material and a carbonization process of heat-treating at a temperature of 800°C to 1,000°C after a dry dispersion process. The mixing and dispersion method is performed through methods such as a planetary, 3D-mixer, V-mixer, mechano-fusion, hybridizer, and paste mixer.

### <Example 1>

Silicon oxide (SiOₓ) was used as the silicon-based material to be coated, and liquid coal tar was used as the coating material. Specifically, a negative electrode active material including a material obtained by coating the liquid coal tar in an amount of 1 part by weight based on 100 parts by weight of the silicon oxide (SiOₓ) and carbonizing the same at 900°C was manufactured.

### <Example 2>

A negative electrode active material was manufactured in the same manner as in Example 1, except that the liquid coal tar was coated in an amount of 4 parts by weight based on 100 parts by weight of the silicon oxide (SiOₓ).

### <Example 3>

A negative electrode active material was manufactured in the same manner as in Example 1, except that the liquid coal tar was coated in an amount of 7 parts by weight based on 100 parts by weight of the silicon oxide (SiOₓ).

### <Example 4>

A silicon-carbon composite (Si-C composite) was used as the silicon-based material to be coated, and liquid coal tar was used as the coating material. Specifically, a negative electrode active material including a material obtained by coating the liquid coal tar on the silicon-carbon composite and carbonizing the same at 900°C was manufactured.

### <Example 5>

A negative electrode active material was manufactured in the same manner as in Example 4, except that the liquid coal tar was coated in an amount of 4 parts by weight based on 100 parts by weight of the silicon-carbon composite (Si-C composite).

### <Example 6>

A negative electrode active material was manufactured in the same manner as in Example 4, except that the liquid coal tar was coated in an amount of 7 parts by weight based on 100 parts by weight of the silicon-carbon composite (Si-C composite).

### <Comparative Example 1>

A negative electrode active material was manufactured in the same manner as in Example 1, except that the liquid coal tar was not added as a coating material.

### <Comparative Example 2>

A negative electrode active material was manufactured in the same manner as in Example 1, except that the liquid coal tar was coated in an amount of 9 parts by weight based on 100 parts by weight of the silicon oxide (SiOₓ).

### <Comparative Example 3>

A negative electrode active material was manufactured in the same manner as in Example 1, except that the liquid coal tar was coated in an amount of 18 parts by weight based on 100 parts by weight of the silicon oxide (SiOₓ).

### <Comparative Example 4>

A negative electrode active material was manufactured in the same manner as in Example 4, except that the liquid coal tar was not added as a coating material.

### <Comparative Example 5>

A negative electrode active material was manufactured in the same manner as in Example 4, except that the liquid coal tar was coated in an amount of 9 parts by weight based on 100 parts by weight of the silicon-carbon composite (Si-C composite).

### <Comparative Example 6>

A negative electrode active material was manufactured in the same manner as in Example 1, except that solid pitch was coated in an amount of 2 parts by weight based on 100 parts by weight of the silicon oxide (SiOₓ).

### <Comparative Example 7>

A negative electrode active material was manufactured in the same manner as in Example 4, except that solid pitch was coated in an amount of 2 parts by weight based on 100 parts by weight of the silicon-carbon composite (Si-C composite).

### <Manufacture of Silicon-Based Single Electrode>

As a method for manufacturing a silicon-based single electrode including, as a negative electrode active material, silicon oxide (SiOₓ) used as the material to be coated in Examples 1 to 3, Comparative Examples 1 to 3, and Comparative Example 6, the negative electrode active material, a binder (PAA), and a conductive material (Super P) were prepared and mixed such that a weight ratio of the negative electrode active material:binder:conductive material was 75:24:1, thereby preparing a slurry. The slurry was uniformly applied onto a copper (Cu, about 10 µm thick) current collector, pressed by a roll press, and dried to manufacture a negative electrode. Specifically, the electrode was manufactured to have a loading amount of 2 mg/cm² to 3 mg/cm² and an electrode density of 0.8 g/cc to 1.2 g/cc.

Lithium metal (Li-metal) was used as a counter electrode, and an electrolyte solution prepared by dissolving 1 mol of LiPF₆ solution in a mixed solvent having a volume ratio of ethylene carbonate (EC):dimethyl carbonate (DMC) of 3:7 was used.

A CR 2032 half coin cell was manufactured according to a conventional manufacturing method using the negative electrode, lithium metal, and the electrolyte solution.

### <Manufacture of Silicon-Based Mixed Electrode>

As a method for manufacturing a silicon-based mixed electrode including, as a negative electrode active material, a silicon-carbon composite (Si-C composite) used as the material to be coated in Examples 4 to 6, Comparative Examples 4 to 5, and Comparative Example 7, the negative electrode active material, a binder (SBR-CMC), and a conductive material (Super P) were prepared such that a weight ratio of the negative electrode active material:binder:conductive material was 96.1:2.9:1, then added to distilled water and uniformly mixed, thereby preparing a slurry.

At this time, as the negative electrode active material, a mixed product including 8% of a silicon-based material and 92% of spheroidized natural graphite and having a capacity of about 440 mAh/g to 450 mAh/g was applied. The slurry was uniformly applied onto a copper (Cu, about 10 µm thick) current collector, pressed by a roll press, and dried to manufacture a negative electrode. Specifically, the electrode was manufactured to have a loading amount of 7 mg/cm² to 8 mg/cm² and an electrode density of 1.55 g/cc to 1.60 g/cc.

Lithium metal (Li-metal) was used as a counter electrode, and an electrolyte solution prepared by dissolving 1 mol of LiPF₆ solution in a mixed solvent having a volume ratio of ethylene carbonate (EC):dimethyl carbonate (DMC) of 3:7 was used.

A CR 2032 half coin cell was manufactured according to a conventional manufacturing method using the negative electrode, lithium metal, and the electrolyte solution.

Table 1 below shows whether nano carbon beads were formed and the size of nano carbon beads according to the material to be coated, the coating material, and the content of the coating material.

**[Table 1]**

| | Material to be Coated | Coating Material | Coating Material Content | Coating Material Content After Carbonization at 900°C | Sulfur Content | Presence of Nano Carbon Beads | Size of Nano Carbon Beads | [Sulfur Content (wt%)]/[ Coating Material Content (wt%)] × 100 - Equation 4 | [Sulfur Content (wt%)]/[C oating Material Content After Carboniza tion at 900°C (wt%)] × 100 - Equation 3 |
|---|---|---|---|---|---|---|---|---|---|
| | | | (wt%) | (wt%) | (wt%) | | (nm) | | |
| Example 1 | SiOx | Coal tar | 1 | 0.21 | 0.03 | O | <100 | 3.00 | 14.29 |
| Example 2 | SiOx | Coal tar | 4 | 0.83 | 0.03 | O | <100 | 0.75 | 3.61 |
| Example 3 | SiOx | Coal tar | 7 | 1.46 | 0.03 | O | <100 | 0.43 | 2.05 |
| Example 4 | Si-C | Coal tar | 1 | 0.21 | 0.249 | O | <100 | 24.9 | 118.57 |
| Example 5 | Si-C | Coal tar | 4 | 0.83 | 0.25 | O | <100 | 6.25 | 30.12 |
| Example 6 | Si-C | Coal tar | 7 | 1.46 | 0.254 | O | <100 | 3.63 | 17.40 |
| Comparative Example 1 | SiOx | Coal tar | 0 | 0 | 0 | X | X | 0 | 0 |
| Comparative Example 2 | SiOx | Coal tar | 9 | 1.87 | 0.034 | O | <100 | 0.38 | 1.81 |
| Comparative Example 3 | SiOx | Coal tar | 18 | 3.74 | 0.039 | O | <100 | 0.22 | 1.04 |
| Comparative Example 4 | Si-C | Coal tar | 0 | 0 | 0.22 | X | X | 0 | 0 |
| Comparative Example 5 | Si-C | Coal tar | 9 | 1.87 | 0.256 | O | <100 | 2.84 | 13.69 |
| Comparative Example 6 | SiOx | Pitch | 2 | 1.4 | 0 | X | X | 0 | 0 |
| Comparative Example 7 | Si-C | Pitch | 2 | 1.4 | 0.22 | X | X | 11.0 | 15.71 |

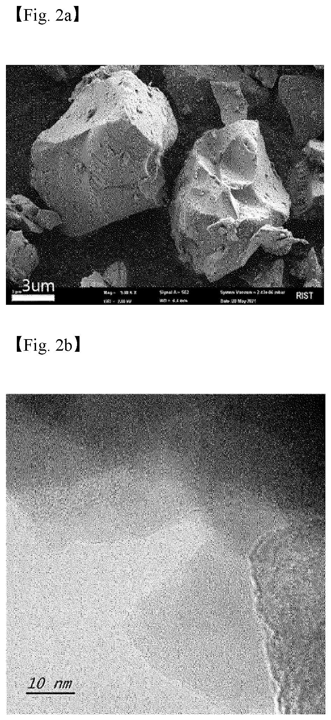

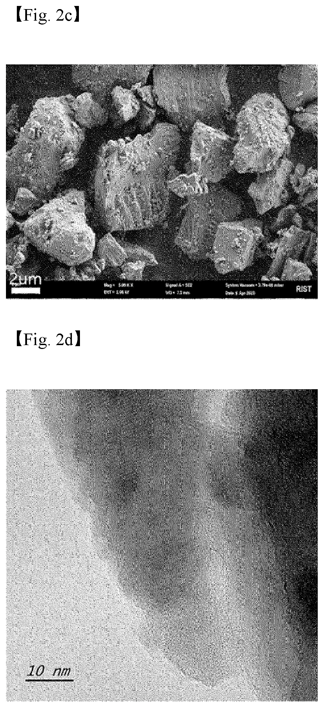

FIGS. 2A and 2B are SEM and TEM photographs of a negative electrode active material for a lithium secondary battery according to Comparative Example 2 of the present invention, and FIGS. 2C and 2D are SEM and TEM photographs of a negative electrode active material for a lithium secondary battery according to Comparative Example 6 of the present invention.

Referring again to FIGS. 1A and 1B, the negative electrode active material for a lithium secondary battery according to Example 2 of the present invention is shown in SEM and TEM photographs, and in the case of Example 2, it can be confirmed that a carbon layer and nano carbon beads are formed.

Referring to FIGS. 2A and 2C, compared with FIGS. 1A and 1B, it can be confirmed that a carbon layer is formed but nano carbon beads are not formed, and accordingly, it can be confirmed that initial capacity, initial efficiency, and mixed lifespan have inferior effects.

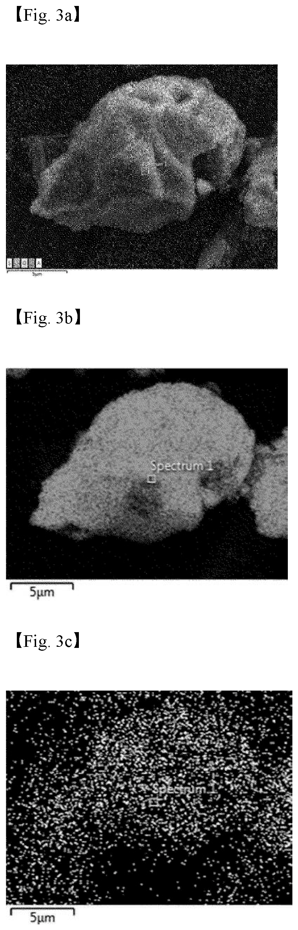

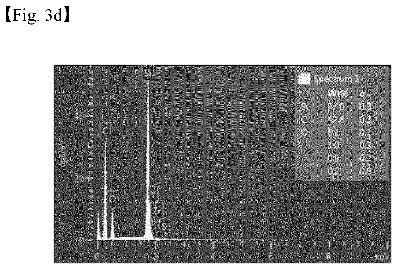

Referring to FIGS. 3A to 3D, FIG. 3A shows mapping of Si, S, O, and C, FIG. 3B shows mapping of Si, FIG. 3C shows mapping of S, and FIG. 3D shows a spectrum for each element.

Referring to FIGS. 3A to 3D, the S content of the Examples of the present invention can be more clearly confirmed. By including the S content within the range of the present invention, nano carbon beads can be appropriately formed.

Referring to Table 2 below, characteristics of the negative electrode active materials for a lithium secondary battery according to the Examples and Comparative Examples of Table 1 can be confirmed. Specifically, initial capacity, initial efficiency, and mixed lifespan are shown. In the case of a single electrode, initial efficiency is calculated as (discharge capacity/charge capacity)×100 after one measurement of charging at CC-CV 0.1 C & 5 mV (0.005 C cutoff) and discharging at 0.1 C 1.5 V cut-off. In addition, in the case of a single electrode, initial capacity is calculated as a specific capacity (mAh/g) during discharge after three measurements of charging at CC-CV 0.1 C & 5 mV (0.005 C cutoff) and discharging at 0.1 C 1.5 V cut-off. In addition, in the case of a mixed electrode, mixed lifespan is calculated as (50th lifespan discharge capacity/1st lifespan discharge capacity) after one activation by charging at CC-CV 0.1 C & 5 mV (0.005 C cutoff) and discharging at 0.1 C 1.5 V cut-off, followed by 50 lifespan measurements by charging at CC-CV 0.5 C 1.0 V cut-off.

D10, D50, and D90 of secondary particles were measured for particle size distribution using a laser diffraction method.

The expansion ratio was evaluated as a percentage obtained by dividing [(thickness of the electrode after 50 cycles - thickness of the Cu current collector) - (thickness of the fresh electrode - thickness of the Cu current collector)] by (thickness of the fresh electrode - thickness of the Cu current collector).

The BET specific surface area was measured by a BET method using Micromeritics ASAP2020, a surface area and porosity analyzer.

**[Table 2]**

| | Second ary Particle D50 (µm) | Seco ndar y Parti cle D10 (µm) | Second ary Particle D90 (µm) | Span Value (D90-D10/D50) | [Second ary Particle D50] × [Coating Material Content After Carboniz ation at 900°C] - Equation 2 (-) | BET Specific Surface Area (m²/g) | Raman Peak Related Data R(Id/Ig) | Initial Capacity (mAh/g) | Expa nsion Ratio (%) | Initial Efficie ncy (%) | Mixe d Lifes pan (%) | Coatin g Materi al Conten t After Carbon ization × BET - Equati on 1 |
|---|---|---|---|---|---|---|---|---|---|---|---|---|
| Exam ple 1 | 6.7 | 2.3 | 10.6 | 1.24 | 1.41 | 4.21 | 1.06 | 1502 | 46.2 | 82.1 | 75.2 | 0.88 |
| Exam ple 2 | 6.9 | 2.5 | 10.8 | 1.20 | 5.73 | 2.12 | 1.08 | 1514 | 44.3 | 83.2 | 76.8 | 1.76 |
| Exam ple 3 | 9.5 | 6.3 | 14.5 | 0.86 | 13.87 | 2.35 | 1.09 | 1494 | 45.9 | 82.4 | 74.2 | 3.43 |
| Exam ple 4 | 8.9 | 3.2 | 15.6 | 1.39 | 1.87 | 6.52 | 1.42 | 1538 | 57.5 | 85.6 | 76.5 | 1.37 |
| Exam ple 5 | 9.1 | 3.7 | 15.57 | 1.30 | 7.55 | 5.25 | 1.5 | 1585 | 51.2 | 86.2 | 78.2 | 4.36 |
| Exam ple 6 | 9.3 | 3.9 | 15.65 | 1.26 | 13.58 | 4.37 | 1.56 | 1571 | 53.3 | 85.2 | 77.1 | 6.38 |
| Comp arative Exam ple 1 | 6.5 | 2.1 | 10.4 | 1.28 | 0 | 6.25 | X | 1358 | 51.8 | 76.1 | 46.2 | 0 |
| Comp arative Exam ple 2 | 9.9 | 5.7 | 15.8 | 1.02 | 18.51 | 6.12 | 1.13 | 1435 | 47.6 | 79.1 | 65.5 | 11.44 |
| Comp arative Exam ple 3 | 18.9 | 11.1 | 26.3 | 0.80 | 70.69 | 5.69 | 1.19 | 1396 | 53.2 | 78.1 | 55.5 | 21.28 |
| Comp arative Exam ple 4 | 8.61 | 3 | 15.5 | 1.45 | 0 | 10.85 | X | 1542 | 75.2 | 83.2 | 61.1 | 0 |
| Comp arative Example 5 | 9.5 | 4.1 | 15.7 | 1.22 | 17.77 | 9.98 | 1.67 | 1515 | 68.8 | 83.8 | 67.5 | 18.66 |
| Comp arative Exam ple 6 | 11.1 | 3.2 | 15.5 | 1.11 | 15.54 | 6.84 | X | 1436 | 51.3 | 77.3 | 52.2 | 9.58 |
| Comp arative Exam ple 7 | 12.25 | 4.62 | 24.3 | 1.61 | 17.15 | 10.21 | X | 1513 | 64.4 | 83.6 | 65.7 | 14.29 |

FIGS. 3A to 3D are SEM-EDAX photographs of a negative electrode active material for a lithium secondary battery according to an embodiment of the present invention.

The present invention is not limited to the above embodiments and/or Examples, and may be manufactured in various different forms. A person having ordinary skill in the art to which the present invention pertains will understand that the present invention may be embodied in other specific forms without changing the technical spirit or essential features of the present invention. Therefore, the above-described embodiments and/or Examples should be understood as illustrative in all respects and not restrictive.

## Claims

1. A negative electrode active material for a lithium secondary battery, comprising:
a silicon-based base material; and
a coating layer coated on a surface of the silicon-based base material,
wherein the coating layer comprises a carbon layer and at least one nano carbon bead,
wherein the carbon layer and the nano carbon bead comprise sulfur, and
wherein a content of a coating material is 0.10 wt% to 1.50 wt% based on 100 wt% of an entire active material.

2. The negative electrode active material for a lithium secondary battery of claim 1, satisfying the following Equation 1: <Equation 1> $0.50 \leq coating material content \left[wt%\right] \times BET specific surface area \left[{m}^{2}/g\right] \leq 9.50 .$

3. The negative electrode active material for a lithium secondary battery of claim 1, satisfying the following Equation 2: <Equation 2> 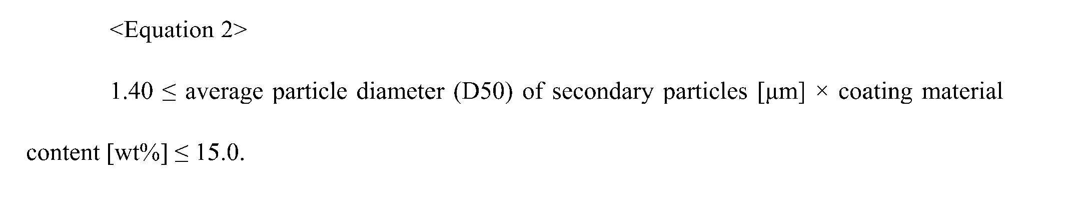 1.40 ≤ average particle diameter (D50) of secondary particles [µm] × coating material content [wt%] ≤ 15.0.

4. The negative electrode active material for a lithium secondary battery of claim 1, satisfying the following Equation 3: <Equation 3> $2.0 \leq \left(sulfur content \left[wt%\right]/coating material content \left[wt%\right]\right) \times 100 \leq 120.0 .$

5. The negative electrode active material for a lithium secondary battery of claim 1,
wherein the sulfur is included in an amount of 0.03 wt% to 0.3 wt%.

6. The negative electrode active material for a lithium secondary battery of claim 1,
wherein a D10 particle diameter of secondary particles is 2.0 µm to 6.5 µm.

7. The negative electrode active material for a lithium secondary battery of claim 1,
wherein an average particle diameter (D50) of secondary particles is 6.7 µm to 9.5 µm.

8. The negative electrode active material for a lithium secondary battery of claim 1,
wherein a D90 particle diameter of secondary particles is 10.6 µm to 15.7 µm.

9. The negative electrode active material for a lithium secondary battery of claim 1,
wherein a Span value ((D90-D10)/D50) of secondary particles is 0.80 to 1.40.

10. The negative electrode active material for a lithium secondary battery of claim 1,
wherein the silicon-based base material is silicon alone, silicon oxide, silicon nitride, silicon sulfide, silicon carbide, a silicon-metal alloy, or a combination thereof.

11. The negative electrode active material for a lithium secondary battery of claim 1,
wherein the carbon layer is an amorphous carbon layer.

12. The negative electrode active material for a lithium secondary battery of claim 1,
wherein the carbon layer has a thickness of 1.0 nm to 10 nm.

13. The negative electrode active material for a lithium secondary battery of claim 1,
wherein the at least one nano carbon bead is configured as at least one cluster.

14. The negative electrode active material for a lithium secondary battery of claim 1,
wherein the at least one nano carbon bead is at least one of a spherical shape and an elliptical shape.

15. A method for manufacturing a negative electrode active material for a lithium secondary battery, comprising:
uniformly mixing a silicon-based material to be coated and a coating material containing sulfur; and
heat-treating and carbonizing a mixed resultant,
wherein the coating material is included in an amount of 1 part by weight to 8 parts by weight with respect to 100 parts by weight of the material to be coated.

16. The method for manufacturing a negative electrode active material for a lithium secondary battery of claim 15, satisfying the following Equation 4: <Equation 4> 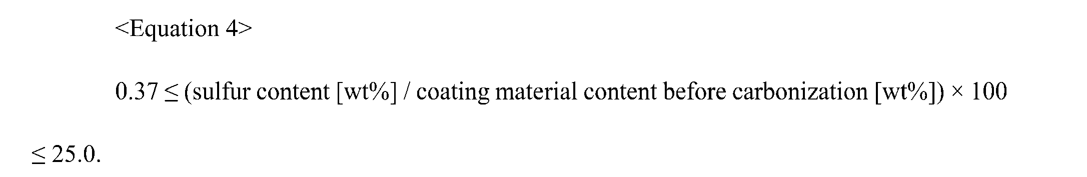 0.37 ≤ (sulfur content [wt%] / coating material content before carbonization [wt%]) × 100 ≤ 25.0.

17. The method for manufacturing a negative electrode active material for a lithium secondary battery of claim 15,
wherein the silicon-based material to be coated comprises silicon alone, silicon oxide, silicon nitride, silicon sulfide, silicon carbide, a silicon-metal alloy, or a combination thereof.

18. The method for manufacturing a negative electrode active material for a lithium secondary battery of claim 15,
wherein the coating material containing sulfur is coal tar or petroleum-based residual oil (PFO: pyrolyze.
